# EUROPÄISCHE PATENTANMELDUNG

(11) **EP 1 126 677 A2**
(43) Veröffentlichungstag der Anmeldung: **22.08.2001**
(21) Anmeldenummer: 00127501.5
(22) Anmeldetag: 15.12.2000
(51) Int. Cl.: H04L 29/06

(54) **Schutz von sicherheitskritischen Daten in Netzwerken**

(30) Priorität: 20.12.1999 DE 19961399
(71) Anmelder: Müschenborn, Hans-Joachim, Dr., 53127 Bonn (DE)
(72) Erfinder: Müschenborn, Hans-Joachim, Dr., 53127 Bonn (DE)
(74) Vertreter: Reichel, Wolfgang, Dipl.-Ing.

(57) **Zusammenfassung**

**2.1.** Bestehende Netzwerksysteme nach dem Client/Server-Prinzip erfordern auf der Serverseite stets die Bereitstellung von freien Verbindungsendpunkten. Die große Anzahl von Serverprozessen hat eine große Anzahl von freien Verbindungsendpunkten zur Folge. Jeder freie Verbindungsendpunkt ist jedoch ein potentieller Angriffspunkt für böswillige Clients. Aufgabe der vorliegenden Erfindung ist es, das Risiko eines Einbruches in ein Netzwerk mit sicherheitskritischen Daten zu minimieren.

**2.2.** Die vorliegende Erfindung realisiert die unter 2.1 genannte Aufgabe durch Minimierung der Anzahl freier Verbindungsendpunkte, deren zeitlich beschränkte Bereitstellung, der zufälligen Auswahl ihrer lokalen Kennungen und durch gleichzeitige Isolierung sicherheitskritischer Daten auf Einheiten, welche nach Aufbau vordefinierter stehender Verbindungen keine freien Verbindungsendpunkte mehr zur Verfügung stellen. Dies verhindert einen unkontrollierten Verbindungsaufbau zu Einheiten, welche sicherheitkritische Daten speichern, und bietet dennoch die Möglichkeit, kontrolliert auf die sicherheitskritischen Daten aus dem Netzwerk zuzugreifen. Unterschiedliche Protokolle auf unterschiedlichen Verbindungen eines Services, welcher den Zugriff auf die sicherheitskritischen Daten überwacht, erlauben es sogar, die sicherheitskritischen Daten aus dem Netzwerk zu administrieren, ohne daß Administrationsfunktionen normalen Clients zugänglich sind.

**2.3.** Sicherheitskritische Daten, Sicherheitskritische Netzwerke, Internet-Sicherheit, Intranet-Sicherheit, Extranet-Sicherheit, Electronic-Commerce, Bereitstellen geschützter Daten in Netzwerken.

## Beschreibung

Die Erfindung betrifft den Schutz von sicherheitskritischen Daten in Netzwerken gemäß einem der Ansprüche 1 bis 34.

In modernen Netzwerken besteht häufig das Problem, daß bestimmte Daten, wie zum Beispiel Autorisierungsdaten oder Kundenkonti, für den Betrieb des Netzwerkes zwingend erforderlich sind und im Netzwerk verfügbar sein müssen, die Daten jedoch gleichzeitig besonders sicherheitskritisch sind und nur einem begrenzten Benutzerkreis zugänglich sein oder von einem begrenzten Benutzerkreis manipuliert werden dürfen. Das Problem gilt gleichermaßen für rein private Netzwerke, wie z.B. firmeninterne Intranets, als auch in verstärktem Maße in öffentlich zugänglichen Netzen, wie z.B.: des Internets. Darüber hinaus sind viele Firmen auch im Internet vertreten und müssen bei schlechter Abgrenzung ihrer internen Netze Einbrüche aus öffentlichen Netzen befürchten. Die wirtschaftlichen Schäden können, je nach Qualität der gehackten Daten, sogar existenzbedrohend für ein betroffenes Unternehmen werden.

Ursache vieler geglückter Hackerangriffe ist dabei die Tatsache, daß moderne Netzwerke nach dem Client/Server-Modell aufgebaut sind und viele Server-Einheiten zum Teil eine sehr hohe Zahl von Server-Prozessen mit entsprechend vielen freien Verbindungsendpunkten bereitstellen. Da jeder freie Verbindungsendpunkt eines Servers auch ein potentieller Angriffspunkt eines böswilligen Clients ist, nimmt das Risiko eines Einbruches mit zunehmender Anzahl von freien Verbindungsendpunkten zu.

Das Sicherheitsrisiko läßt sich nur durch konsequente Reduzierung der Anzahl von freien Verbindungsendpunkten und damit von Server-Prozessen verringern, was jedoch dem Client/Server-Prinzip widerspricht. Eine Lösung dieses Problems bietet die vorliegende Erfindung.

Nach dem Stand der Technik erfolgt der logische Verbindungsaufbau in Netzwerken nach dem Client/Server Prinzip wie folgt:

Eine durch eine eindeutige physikalische Kennung identifizierte Einheit führt einen Thread (Server genannt) aus, der mindestens einen logischen Verbindungsendpunkt zur Verfügung stellt, welcher Endpunkt auf der den Server ausführenden Einheit durch eine lokale Kennung eindeutig identifiziert ist, und wartet anschließend bis ein anderer Thread (Client), welcher auf derselben oder einer anderen Einheit ausgeführt wird, eine Verbindung zu diesem Endpunkt anfordert. Vorausgesetzt die Einheiten, auf welchen Server und Client ausgeführt werden, sind physikalisch miteinander verbunden, benötigt der Client zum Verbindungsaufbau einerseits die eindeutige Identifikation der Einheit, auf welcher der Server ausgeführt wird, und andererseits die auf der Servereinheit lokal eindeutige Kennung des Verbindungsendpunktes, welchen der Server zur Verfügung stellt. Beide Informationen zusammen genügen, um den Verbindungendpunkt eines Servers im gesamten Netzwerk eindeutig zu identifizieren. Hat ein Server eine Verbindungsanforderung eines Clients empfangen, entscheidet der Server über die Annahme oder Ablehnung der Anforderung. Eine Verbindung kommt nur zustande, wenn der Server die Anforderung gegebenenfalls nach einer positiv ausgefallenen Überprüfung der Zugangsberechtigung des Clients annimmt. Fällt die Überprüfung der Zugangsberechtigung des Clients negativ aus, bricht der Server den Verbindungsaufbau ab und es kommt keine Verbindung zustande. Nach diesem Mechanismus sind ausschließlich logische Punkt-zu-Punkt Verbindungen zwischen einem Client und einem Server aufbaubar. Logische Verbindungen zwischen zwei Clients, zwei Servern oder mehr als zwei Clients und/oder Servern sind nicht möglich.

Eine Verbindung zwischen Client und Server kann sowohl nur für eine einzige Transaktion (temporäre Verbindung) als auch dauerhaft über längere Zeiträume (stehende Verbindung) bestehen. Nach Abschluß aller Transaktionen wird die Verbindung von einem der beiden Transaktionspartnern geschlossen, woraufhin der andere Partner seinerseits die Verbindung schließt.

Ein typisches Beispiel solcher Netzwerke ist das Internet oder Internet-ähnliche Intranets, welche aus mehreren freiprogrammierbaren, physikalisch vernetzten Rechenmaschinen bestehen. Die Steuerung einer jeden Rechenmaschine erfolgt durch ein Betriebssystem, der Netzwerk- sowie der Anwendungsprogramme. Homogene Systeme umfassen gleich- oder verschiedenartige Rechenmaschinen welche von gleichartigen Betriebssystemen gesteuert werden. Heterogene Systeme bestehen aus gleich- oder verschiedenartigen Rechenmaschinen welche durch gleich- oder verschiedenartige Betriebssysteme gesteuert werden. Die Netzwerkprogramme sind typischerweise nach dem ISO/OSI-Modell aufgebaut, verwenden das UDP/IP- oder TCP/IP-Protokoll und dienen zum Informationsaustausch zwischen verschiedenen Softwarekomponenten, welche auf derselben oder verschiedenen gleich- oder verschiedenartigen Rechenmaschinen ausgeführt werden.

Typische Vertreter, welche nach dem beschriebenen Client/Server-Prinzip arbeiten, sind die Betriebsysteme Unix, Windows NT, OS/2 oder NetWare, sowie die Middleware DCE, TUXEDO oder CORBA.

Folgende Punkte wirken sich besonders nachteilig auf die Sicherheit eines Netzwerksystems nach dem Client/Server-Prinzip aus:
1. Jeder freie Verbindungsendpunkt eines Servers, welcher auf einer mit einem Netzwerk verbundenen Einheit ausgeführt wird, ist ein potentieller Angriffspunkt für böswillige Clients. Stellt eine Einheit mehrere Verbindungsendpunkte eines oder mehrerer Server zur Verfügung, ist jeder einzelne Verbindungsendpunkt ein potentieller Angriffspunkt.
2. Die Sicherheit des Gesamtsystems ist durch die Sicherheit des schwächsten Servers gegeben und nimmt mit zunehmender Anzahl von Servern ab.
3. Nach dem Stand der Technik werden im Internet alle Funktionalitäten, welche eine Einheit im Netzwerk zur Verfügung stellt, als Server realisiert. Dies führt in der Praxis auf einzelnen Einheiten zu sehr vielen Servern mit entsprechend vielen freien Verbindungsendpunkten.
4. Ein wohldefinierter, einheitlicher Sicherheitstandard eines Gesamtsystems kann nur dann garantiert werden, wenn jeder einzelne Server denselben Sicherheitstandard bietet.

In der Praxis ist ein einheitlicher Sicherheitstandard nur mit sehr hohem wirtschaftlichen Aufwand erreichbar, da jeder einzelne Server
1. die erforderlichen Sicherheitsmechanismen implementieren muß,
2. die Sicherheitsmechanismen jedes einzelnen Servers getestet und verifiziert werden müssen,
3. im laufenden Betrieb der Zugang zu jedem einzelnen Server ständig überwacht werden muß, und
4. im laufenden Betrieb jede einzelne Transaktion eines Clients mit einem Server überwacht und autorisiert werden muß.

Werden darüber hinaus einer oder mehrere Server von Lieferanten bezogen, kommen Probleme bezüglich der Geheimhaltung des (internen) Sicherheitsstandards, der Verfügbarkeit des Quellcodes der Server (zur Modifikation und/oder Verifikation) und/oder der Haftung im Schadensfall hinzu.

Die zugrundeliegende Aufgabe der Erfindung liegt darin, sicherheitskritische Daten derart in Netzwerken bereitzustellen, daß ein unkontrollierter Zugriff technisch unmöglich ist. Zur Lösung dieser Aufgabe bieten sich nach dem Stand der Technik physikalisch getrennte Netzwerke an, die durch Firewalls oder Proxy-Server gegenseitig geschützt sind. Firewalls kontrollieren jedoch nur den Verbindungsaufbau zwischen Clients und Servern aus physikalisch getrennten Netzwerken und bieten nicht die Möglichkeit nach dem erfolgreichen Verbindungsaufbau einzelne Transaktionen auf logischer Ebene zu überwachen. Proxy-Server hingegen bieten diese Möglichkeit, führen jedoch nach positiver Autorisierungsüberprüfung selbst als Client eigene temporäre Transaktionen mit nachgeschalteten (geschützten) Servern aus. Beide Lösungen haben den Nachteil, daß die sicherheitskritischen Daten auf Einheiten gespeichert sind, auf denen mindestens ein Server-Prozeß ausgeführt wird, der jederzeit mindestens einen freien Verbindungsendpunkt bereitstellt.

Das vorliegende Patent löst die gestellte Aufgabe mit Hilfe eines Netzwerkes nach dem Oberbegriff des Anspruchs 1 dahingehend, daß erstens auf Einheiten, welche sicherheitskritische Daten speichern - sicherheitskritische Einheiten genannt - entweder gar kein Server-Prozeß ausgeführt wird und der Service als Client eine Verbindung zu mindestens einer als Server realisierten Zentrale aufbaut, oder daß der Service als Server nur vordefinierte stehende logische Verbindungen von mindestens einer als Client realisierten Zentrale akzeptiert und nach deren Aufbau keine freien Verbindungsendpunkte bereitstellt, so daß der Service keine weiteren Verbindungen akzeptieren kann. Da über die vordefinierten Verbindungen keine weiteren Verbindungen zu einer sicherheitskritischen Einheit aufgebaut werden können, ist ein unkontrollierter Zugang zu der sicherheitskritischen Einheit technisch unmöglich. Die sicherheitskritischen Daten stehen dennoch über die vordefinierten Verbindungen unter der Kontrolle mindestens eines Services und mindestens einer Zentrale in Netz zur Verfügung.

In einem Netzwerksystem nach Anspruch 2 erhält mindestens ein Peripherieprozeß die Möglichkeit mit Kenntnis der logischen Kennung, welche die Zentrale mindestens einer Gruppe von Services zuordnet, mit mindestens einem Service aus dieser Gruppe über die Zentrale indirekt zu kommunizieren.

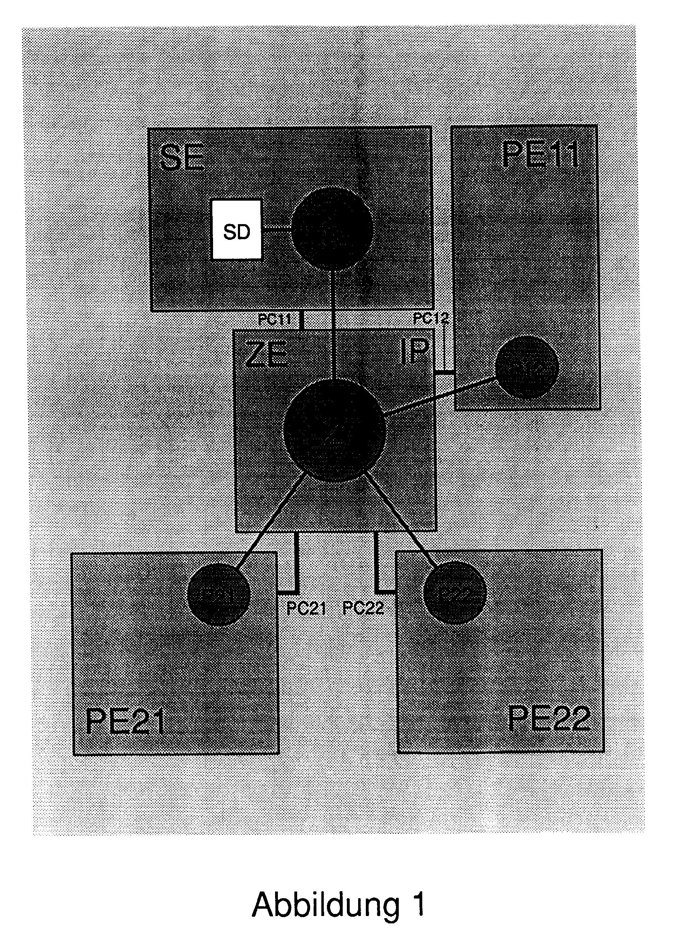

Abbildung 1 zeigt ein Ausführungsbeispiel eines Netzwerksystems nach Anspruch 1 oder 2 bestehend aus einer Einheit ZE, welche über ein Netzwerkinterface mit Adresse IP und den physikalischen Verbindungen PC11, PC12, PC21 und PC22 mit Einheiten SE, PE11, PE21 und PE22 verbunden.

Einheit ZE führt einen Zentralprozeß Z aus, welcher Verbindungen von Prozessen auf SE, PE11, PE21 und PE22 akzeptieren kann. Einheit SE speichert sicherheitskritische Daten SD, welche im gesamten Netzwerk kontrolliert zur Verfügung gestellt werden sollen. Dazu führt SE einen Prozeß S - sicherheitskritischer Service genannt - aus, welcher eine stehende logische Verbindung zu Prozeß Z auf ZE unterhält. Darüber hinaus stellt S keine freien Verbindungsendpunkte zur Verfügung, akzeptiert keine Verbindungsanforderungen und baut keine weiteren logischen Verbindungen auf. Außer S führt SE keine weiteren Thread aus, welche logische Verbindungen aufbauen, akzeptieren oder unterhalten. Die Verbindung zwischen S und Z ist somit die einzige logische Verbindung zu SE, so daß Daten SD nur über diese Verbindung (unter Kontrolle von S und Z) erreicht werden können.

Peripherieprozesse P12 bzw. P21&P22 bauen jeweils eine stehende logische Verbindung zu Z auf und erhalten über diese Verbindung die Möglichkeit via Z mit S zu kommunizieren. Dabei bestimmt Z, welche Nachrichten von einem der Peripherieprozesse an S und von S an einen der Peripherieprozesse weitergeleitet werden, sowie S die Funktionalität und Art des Zugriffes auf die geschützten Daten SD.

Ein Netzwerk nach Anspruch 3 ist zusätzlich in mindestens zwei Segmente aufgeteilt, wobei Nachrichten zwischen den Segmenten nicht geroutet werden, die sicherheitskritische Daten speichernde Einheit SE als Bestandteil eines Segmentes - sicherheitskritisches Segment genannt - von Einheiten aus anderen Segmenten - unkritische Segmente genannt - nicht erreicht werden kann und eine Zentrale den Verkehr zwischen den unkritischen und kritischen Segmenten kontrolliert. Diese Lösung bietet dreifachen Schutz der sicherheitskritischen Daten:
1. aus keinem Segment ist technisch ein Angriff auf die sicherheitskritischen Daten unter Umgehung der Zentrale und des sicherheitskritischen Services möglich, da die sicherheitskritische Einheit nur vordefinierte Verbindungen besitzt und keinen Thread ausführt, welcher einen freien Verbindungsendpunkt für einen böswilligen Peripheriethread bereitstellt,
2. der unkontrollierte direkte Zugriff auf die sicherheitskritische Einheit ist zusätzlich für alle Threads aus unkritischen Segmenten unmöglich, da Nachrichten zwischen sicherheitskritischen und unkritischen Segmenten nicht geroutet werden und
3. Nachrichten aus sicherheitskritischen Segmenten werden nicht durch unkritische Segmente geroutet, so daß sie auch nicht durch direktes Netzwerk-"Sniffen" in unkritischen Segmenten abgehört werden können.

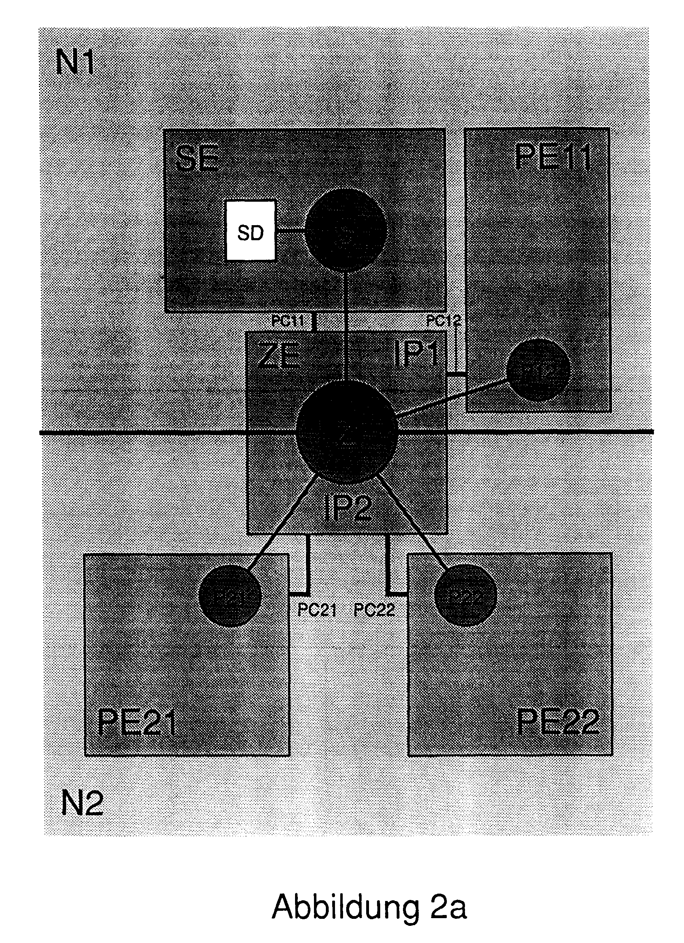

Abbildung 2a zeigt ein Ausführungsbeispiel eines Netzwerksystems nach Anspruch 3 bestehend aus zwei getrennten Netzwerksegmenten N1 (sicherheitskritisch) und N2 (unkritisch). Nachrichten zwischen N1 und N2 werden nicht geroutet, so daß Einheiten des Segmentes N1 keine direkten Verbindungen zu Einheiten des Segmentes N2 aufbauen können. Einheit ZE ist jeweils über ein eigenes Netzwerkinterface mit Adresse IP1 bzw. IP2 sowohl mit Segment N1 als auch Segment N2 verbunden. Einheiten SE&PE11 in N1 sind über die physikalischen Verbindungen PC11/12 mit dem Netzwerkinterface IP1 der Einheit ZE verbunden. Einheiten PE21&PE22 in N2 sind über die physikalischen Verbindungen PC21/22 mit dem Netzwerkinterface IP2 der Einheit ZE verbunden.

Einheit ZE führt einen Prozeß Z aus, welcher über IP1 bzw. IP2 Verbindungen von Prozessen aus N1 wie N2 akzeptieren kann. Einheit SE speichert sicherheitskritische Daten SD, welche im gesamten Netzwerk (N1 & N2) verwendet oder kontrolliert zur Verfügung gestellt werden sollen. Dazu führt SE einen Prozeß S - sicherheitskritischer Service genannt - aus, welcher über die physikalische Verbindung PC11 sowie das Netzwerkinterface IP1 eine stehende logische Verbindung zu Prozeß Z auf ZE unterhält. Darüber hinaus stellt S keine freien Verbindungsendpunkte zur Verfügung, akzeptiert keine Verbindungsanforderungen und baut keine weiteren logischen Verbindungen auf. Außer S führt SE keine weiteren Prozesse aus, welche logische Verbindungen aufbauen, akzeptieren oder unterhalten. Die Verbindung zwischen S und Z ist somit die einzige logische Verbindung zu SE, so daß Daten SD nur über diese Verbindung (unter Kontrolle von S und Z) erreicht werden können.

Peripherieprozesse P12 bzw. P21&P22 bauen über die physikalischen Verbindungen PC12 bzw. PC21&22 sowie das Netzwerkinterface IP1 bzw. IP2 jeweils eine stehende logische Verbindung zu Z auf und erhalten über diese Verbindungen die Möglichkeit via Z mit S zu kommunizieren. Dabei bestimmt Z, welche Nachrichten von einem der Peripherieprozesse an S und von S an einen der Peripherieprozesse weitergeleitet werden, sowie S die Funktionalität und Art des Zugriffes auf die geschützten Daten SD.

In Netzwerksystemen nach Ansprüchen 4 und 5 muß ein verbindungswilliger Peripheriethread nach erfolgtem Verbindungsaufbau der Zentrale zusätzliche Zugangsdaten, wie z.B.: seine Identität und sein Passwort, übermitteln, so daß die Zentrale (Anspruch 4) oder ein isolierter Autorisierungsservice (Anspruch 5) die Zugangsberechtigung des Peripheriethreads überprüfen kann und bei negativem Ausfall der Zugangsüberprüfung die Verbindung zu dem Peripheriethread abbricht. Besonders vorteilhaft ist es in einem Netzwerksystem nach Anspruch 5, zu oder von Einheit AE bis auf die Verbindung zwischen AS und Z keine weiteren logischen Verbindungen zu akzeptieren oder aufzubauen, so daß die Autorisierungsdaten ausschließlich via Z und AS erreichbar sind.

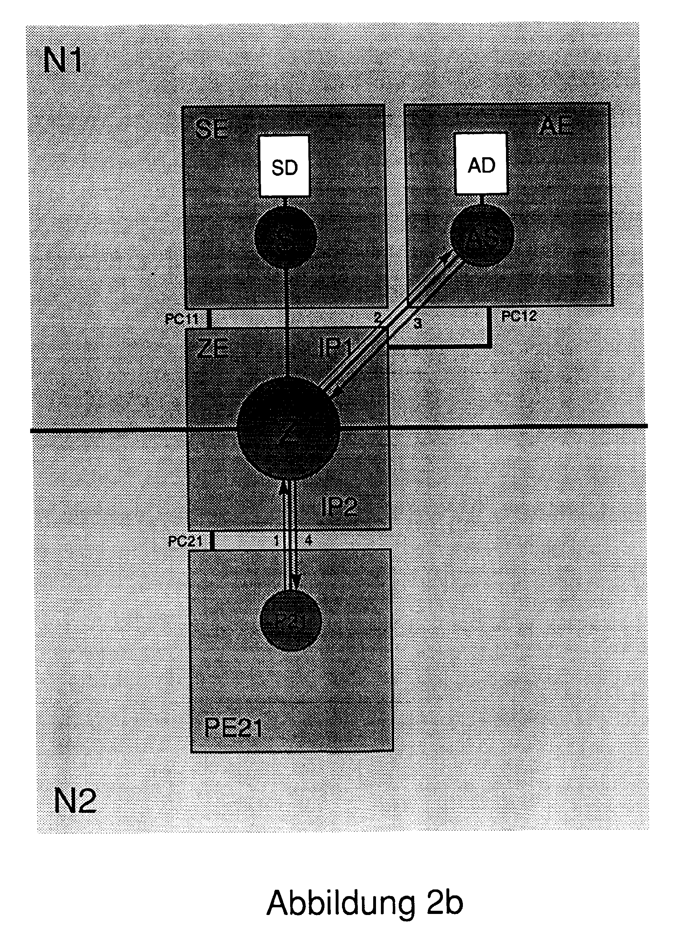

Abbildung 2b zeigt ein Ausführungsbeispiel eines Netzwerksystems nach Anspruch 5 bestehend aus zwei getrennten Netzwerksegmenten N1 (sicherheitskritisch) und N2 (unkritisch). Nachrichten zwischen N1 und N2 werden nicht geroutet, so daß Einheiten des Segmentes N1 keine direkten Verbindungen zu Einheiten des Segmentes N2 aufbauen können. Einheit ZE ist jeweils über ein eigenes Netzwerkinterface mit Adresse IP1 bzw. IP2 sowohl mit Segment N1 als auch Segment N2 verbunden. Einheiten SE&AE in N1 sind über die physikalischen Verbindungen PC11/12 mit dem Netzwerkinterface IP1 der Einheit ZE verbunden. Einheit PE21 in N2 ist über die physikalische Verbindung PC21 mit dem Netzwerkinterface IP2 der Einheit ZE verbunden.

Einheit AE speichert Autorisierungsdaten AD und führt Autorisierungsthread AS aus, welcher eine stehende logische Verbindung zu Z unterhält. Darüber hinaus werden keine weiteren Verbindungen von Threads auf AE aufgebaut oder akzeptiert, so daß Autorisierungsdaten AD ausschließlich über Z und AS zu erreichen sind.

P21 übermittelt nach einem Verbindungsaufbau zu Z seine Zugangsdaten an Z (1), Z leitet die Zugangsdaten an AS weiter (2), AS überprüft die Zugangsdaten unter Berücksichtigung der Autorisierungsdaten AD und teilt Z das Ergebnis der Überprüfung mit (3). Fällt die Überprüfung positiv aus, akzeptiert Z die Verbindung des Peripheriethreads andernfalls bricht Z die Verbindung ab (4).

Für Peripherieprozesse aus unkritischen Segmenten - unkritische Clients genannt - bilden die freien Verbindungsendpunkte der Zentrale die einzigen potentiellen Angriffspunkte. Nachteilig wirkt sich bei einem Netzwerk nach einem der Ansprüche 1 bis 5 aus, daß allen unkritischen Clients ein direkter Zugang zu einer Zentrale gewährt wird, welche eine Verbindung zu einem sicherheitskritischen Service bereitstellt, ohne daß zuvor eine Sicherheitsüberprüfung des Clients stattgefunden hat (Anspruch 1) oder daß die Zentrale mit der Sicherheitsüberprüfung (teil-)belastet wird (Ansprüche 4 und 5). Zweitens könnte ein Dauerangriff auf die freien Verbindungsendpunkte der Zentrale die Leistungsfähigkeit des Systems stark beeinträchtigen, da die Zentrale in einem solchen Fall einen großen Anteil ihrer Zeit mit Autorisierungsprüfungen und der Abwehr unberechtigter Angreifer verbringen muß.

Die Nachteile eines Netzwerksystems nach Ansprüchen 1 bis 5 werden durch ein Netzwerksystem nach Anspruch 6 derart behoben, daß nur eine separate Logonzentrale LZ, welche auf derselben oder einer anderen Zentraleinheit als die Zentrale Z ausgeführt wird, zu jedem Zeitpunkt einen freien Verbindungsendpunkt bereitstellt, zu welchem beliebige Peripherieprozesse eine Verbindung aufbauen können, und die Zentrale freie Verbindungsendpunkte nur nach Aufforderung seitens einer Logonzentrale autorisierten Peripherieprozessen für einen definierten Zeitraum bereitstellt.

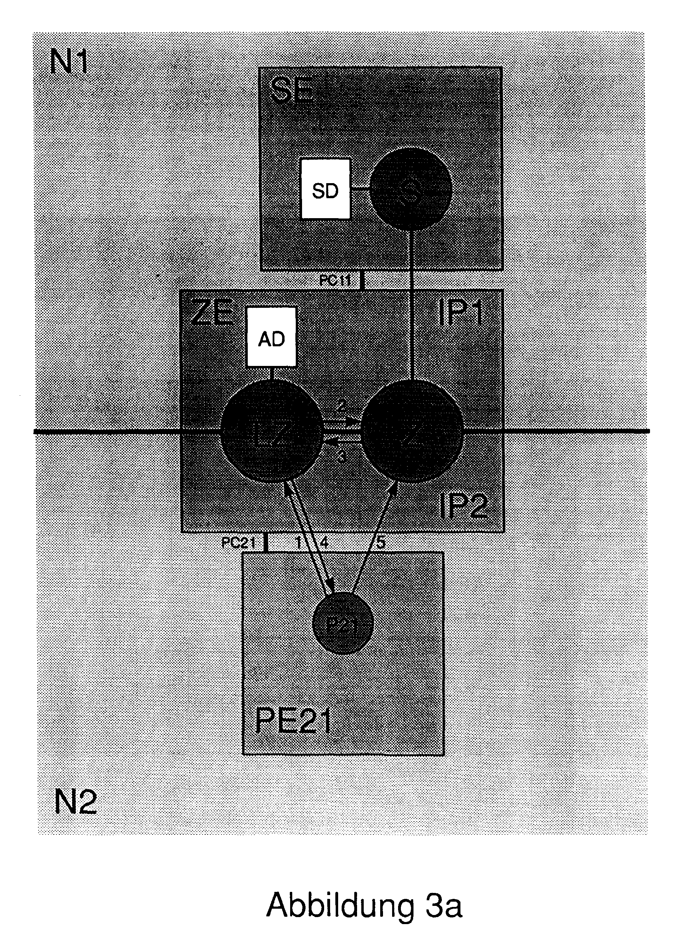

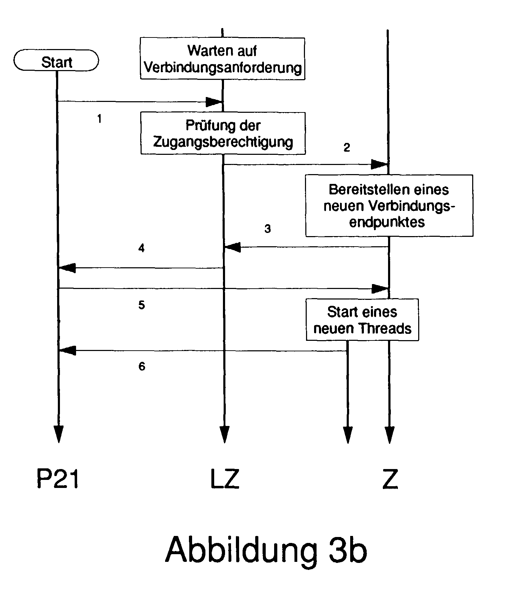

Abbildung 3a) zeigt ein Ausführungsbeispiel eines Netzwerksystems nach Anspruch 6 bestehend aus zwei getrennten Netzwerksegmenten N1 (sicherheitskritisch) und N2 (unkritisch). Nachrichten zwischen N1 und N2 werden nicht geroutet, so daß Einheiten des Segmentes N1 keine direkten Verbindungen zu Einheiten des Segmentes N2 aufbauen können. Einheit ZE ist jeweils über ein eigenes Netzwerkinterface mit Adresse IP1 bzw. IP2 mit anderen Einheiten der Segmente N1 bzw. N2 verbunden. Einheit SE in N1 ist über die physikalische Verbindung PC11 mit dem Netzwerkinterface mit Adresse IP1 der Einheit ZE verbunden. Einheit PE21 in N2 ist über die physikalische Verbindung PC21 mit dem Netzwerkinterface IP2 der Einheit ZE verbunden.

Einheit ZE führt zwei Prozesse Z und LZ aus, welche über IP1 bzw. IP2 Verbindungen von Prozessen aus N1 wie N2 akzeptieren können. LZ stellt zu jedem Zeitpunkt mindestens einen freien Verbindungsendpunkt unter einer fixen lokalen Kennung zur Verfügung. Die lokale Kennung der Verbindungsendpunkte von LZ sowie die Adresse IP1 bzw. IP2 des Netzwerkinterfaces von ZE ist allen Peripherieprozessen in N1 bzw. N2 bekannt, so daß Peripherieprozesse jederzeit eine Verbindung zu LZ aufbauen können. Während des normalen Betriebes unterhält Z nur jeweils stehende Verbindungen zu LZ, S und bereits verbundenen Peripherieprozessen und stellt keine freien Verbindungsendpunkte zur Verfügung. Verbindungswillige Peripherieprozesse aus N1 oder N2 können ohne weiteres keine Verbindung zu Z aufbauen, da erstens Z keine freien Verbindungsendpunkte besitzt und zweitens die Peripherieprozesse nicht über die Kenntnis der lokalen Kennung eines potentiellen Verbindungsendpunktes von Z verfügen.

Der Verbindungsaufbau eines Peripherieprozesses P21 zu Z erfolgt wie in Abbildung 3a (logisch) und 3b (zeitlich) dargestellt: Zu Beginn kennt P21 lediglich die physikalische Kennung des Netzwerkinterfaces IP2 und die lokale Kennung der Verbindungsendpunkte von LZ. Diese Kenntnis genügt P21, um eine Verbindung zu LZ aufzubauen und LZ seine Zugangsdaten zu übermitteln (1). Daraufhin überprüft LZ die Zugangsdaten anhand der Autorisierungsdaten AD. Nach positivem Ausfall der Überprüfung fordert LZ Z dazu auf, einen neuen Verbindungsendpunkt zur Verfügung zu stellen (2). Z kommt dieser Aufforderung nach und sendet LZ die lokale Kennung des neu bereitgestellten Verbindungsendpunktes (3), woraufhin LZ die lokale Kennung an P21 weiterleitet (4). Mit Kenntnis der Adresse des Netzwerkinterfaces IP2 sowie der von LZ erhaltenen lokalen Kennung des neuen Verbindungsendpunktes von Z kann P21 eine direkte Verbindung zu Z anfordern (5). Akzeptiert Z die Verbindungsanforderung, kommt die Verbindung zwischen P21 und Z zustande (6). Anderenfalls, oder auch im Falle, daß die Verbindungsanforderung von P21 an Z nicht innerhalb eines vordefinierten Zeitintervalles nach Bereitstellung des neuen Verbindungsendpunktes erfolgt, löscht Z den neuen Verbindungsendpunkt, womit das System seinen Ursprungszustand wieder erreicht und zu Z keine direkten Verbindungen aufgebaut werden können.

Der Vorteil eines Netzwerksystems nach Anspruch 6 liegt darin, daß die Angriffsfläche der Zentrale auf das kleinstmögliche Maß reduziert ist, ohne ihre Verbindungsfähigkeit zu beeinträchtigen: Um die Logonzentrale zu umgehen muß ein potentieller Angreifer während des Zeitintervalles in welchem die Zentrale für einen autorisierten Peripherieprozeß einen freien Verbindungsendpunkt bereitstellt, vor dem autorisierten Peripherieprozeß eine Verbindung zu diesem Verbindungsendpunkt aufbauen.

Anspruch 7 charakterisiert einen Spezialfall von Anspruch 6, in dem die Verbindung zwischen Logonzentrale und Zentrale durch eine stehende logische Verbindung realisiert wird, wodurch nach dem Aufbau der Verbindung zwischen Logonzentrale und Zentrale gewährleistet werden kann, daß kein anderer Prozeß sich als vorgetäuschte Logonzentrale mit der Zentrale verbinden kann.

In einem Netzwerksystem nach Anspruch 8 kann eine Logonzentrale zusätzlich eine Autorisierungsprüfung verbindungswilliger Peripherieprozesse unabhängig von der Zentrale vornehmen und die Zentrale nur nach positivem Ausfall dieser Prüfung zur Bereitstellung eines Verbindungsendpunktes auffordern. Dadurch wird die Zentrale stark von Autorisierungsaufgaben entlastet. Nachteilig wirkt sich jedoch aus, daß die Autorisierungsdaten auf jeder Zentraleinheit, welche eine Logonzentrale ausführt, gespeichert sein müssen. Da diese Daten besonders sicherheitskritisch sind, ist es sinnvoll, sie nach demselben Prinzip wie sicherheitskritische Daten in einem Netzwerk nach einem der Ansprüche 1 bis 7 zu schützen.

In einem Netzwerksystem nach Anspruch 9 sind die Autorisierungsdaten auf eine separate Einheit im kritischen Segment N1 isoliert, welche über einen Autorisierungsservice AS jeweils eine stehende logische Verbindung zu einer Logonzentrale und einer Zentrale aufbaut und darüber hinaus keine weiteren Verbindungen zu oder von anderen Prozessen aufbaut oder akzeptiert. Dies hat den Vorteil, daß die Autorisierungsdaten im kritischen Segment gespeichert werden, so daß sie aus unkritischen Segmenten nicht erreicht werden können und daß gegebenenfalls mehrere Logonzentralen auf dieselben Autorisierungsdaten zugreifen können, ohne die Daten replizieren zu müssen.

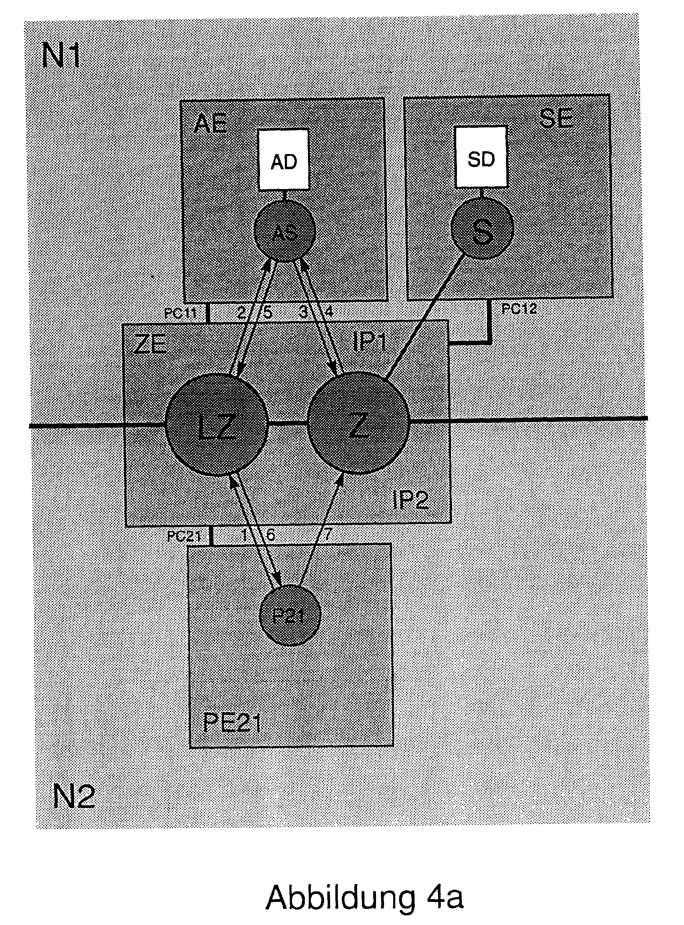

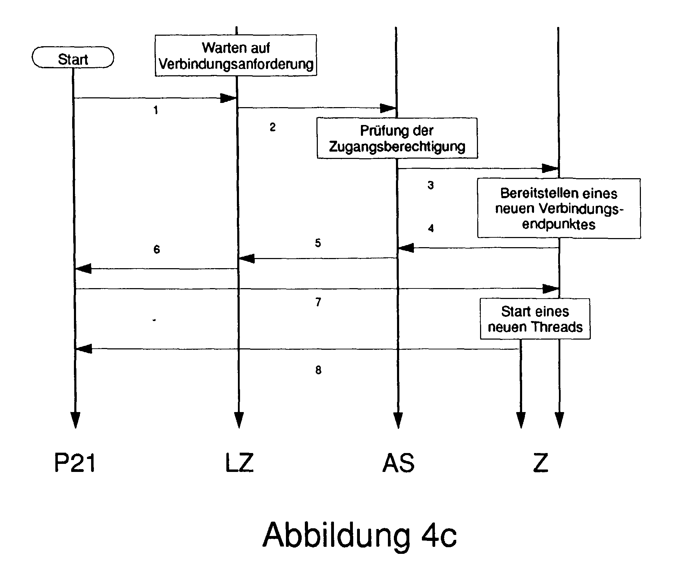

Abbildung 4a) zeigt ein Ausführungsbeispiel eines Netzwerksystems nach Anspruch 9 bestehend aus zwei getrennten Netzwerksegmenten N1 und N2. Nachrichten zwischen N1 und N2 werden nicht geroutet, so daß Einheiten des Segmentes N1 keine direkten Verbindungen zu Einheiten des Segmentes N2 aufbauen können. Einheit ZE ist jeweils über ein eigenes Netzwerkinterface mit Adresse IP1 bzw. IP2 mit anderen Einheiten der Segmente N1 bzw. N2 verbunden. Einheiten AE&SE in N1 sind über die physikalischen Verbindungen PC11&PC12 mit dem Netzwerkinterface IP1 der Einheit ZE verbunden. Einheit PE21 in N2 ist über die physikalische Verbindung PC21 mit dem Netzwerkinterface IP2 der Einheit ZE verbunden.

Einheit ZE führt zwei Prozesse Z und LZ aus, welche über IP1 bzw. IP2 Verbindungen von Prozessen aus N1 wie N2 akzeptieren können. LZ besitzt eine stehende Verbindung zu Autorisierungsservice AS auf AE und stellt zu jedem Zeitpunkt mindestens einen neuen Verbindungsendpunkt unter einer fixen lokalen Kennung zur Verfügung. Die lokale Kennung der Verbindungsendpunkte von LZ sowie die Adresse IP1 bzw. IP2 des Netzwerkinterfaces von ZE ist allen Peripherieprozessen in N1 bzw. N2 bekannt, so daß sie jederzeit eine Verbindung zu LZ aufbauen können.

Z unterhält während des normalen Betriebes jeweils eine stehende Verbindung zu AS, S und bereits verbundenen Peripherieprozessen und stellt keine freien Verbindungsendpunkte zur Verfügung. Verbindungswillige Peripherieprozesse aus N1 oder N2 können ohne weiteres keine Verbindung zu Z aufbauen, da erstens Z keine freien Verbindungsendpunkte besitzt und zweitens die Peripherieprozessen nicht über die Kenntnis der lokalen

Kennung eines potentiellen Verbindungsendpunktes von Z verfügen.

Einheit AE speichert die sicherheitskritischen Autorisierungsdaten AD und führt Autorisierungsservice AS aus, welcher jeweils eine stehende logische Verbindung zu LZ und Z unterhält. Darüber hinaus können zu oder von AS oder anderen Prozessen auf AE keine Verbindungen aufgebaut oder akzeptiert werden, so daß die Autorisierungsdaten AD ausschließlich über AS zugänglich sind.

Wichtig ist in diesem Fall, daß LZ und Z auf derselben Einheit ausgeführt werden, damit die Kommunikation zwischen LZ und Z nicht über ein Netzwerk übertragen werden muß, so daß die Kommunikation zwischen LZ und Z in keinem der Segmente abgehört werden kann.

Der Verbindungsaufbau eines Peripherieprozesses P21 zu Z erfolgt wie in Abbildung 4a (logisch) und 4c (zeitlich) dargestellt: Zu Beginn kennt P21 lediglich die physikalische Kennung des Netzwerkinterfaces IP2 und die lokale Kennung der Verbindungsendpunkte von LZ. Diese Kenntnis genügt P21, um eine Verbindung zu LZ aufzubauen und LZ seine Identität und Zugangsdaten zu übermitteln (1). LZ leitet diese Daten an AS weiter (2), AS überprüft die Identität und Zugangsdaten anhand der Autorisierungsdaten AD und fordert nach positivem Ausfall der Überprüfung Z dazu auf (3), einen neuen Verbindungsendpunkt zur Verfügung zu stellen. Z kommt dieser Aufforderung nach und sendet AS die lokale Kennung dieses Verbindungsendpunktes (4). AS leitet die lokale Kennung des neuen Verbindungsendpunktes via LZ an P21 weiter (5&6). Mit Kenntnis der Adresse des Netzwerkinterfaces IP2 sowie der von LZ erhaltenen lokalen Kennung des neuen Verbindungsendpunktes von Z fordert P21 eine direkte Verbindung zu Z an (7). Akzeptiert Z die Verbindungsanforderung, kommt die Verbindung zwischen P21 und Z zustande (8). Anderenfalls, oder auch im Falle, daß die Verbindungsanforderung von P21 an Z nicht innerhalb eines vordefinierten Zeitintervalles nach Bereitstellung des neuen Verbindungsendpunktes erfolgt, löscht Z den neuen Verbindungsendpunkt, womit das System seinen Ursprungszustand wieder erreicht und zu Z keine direkten Verbindungen aufgebaut werden können.

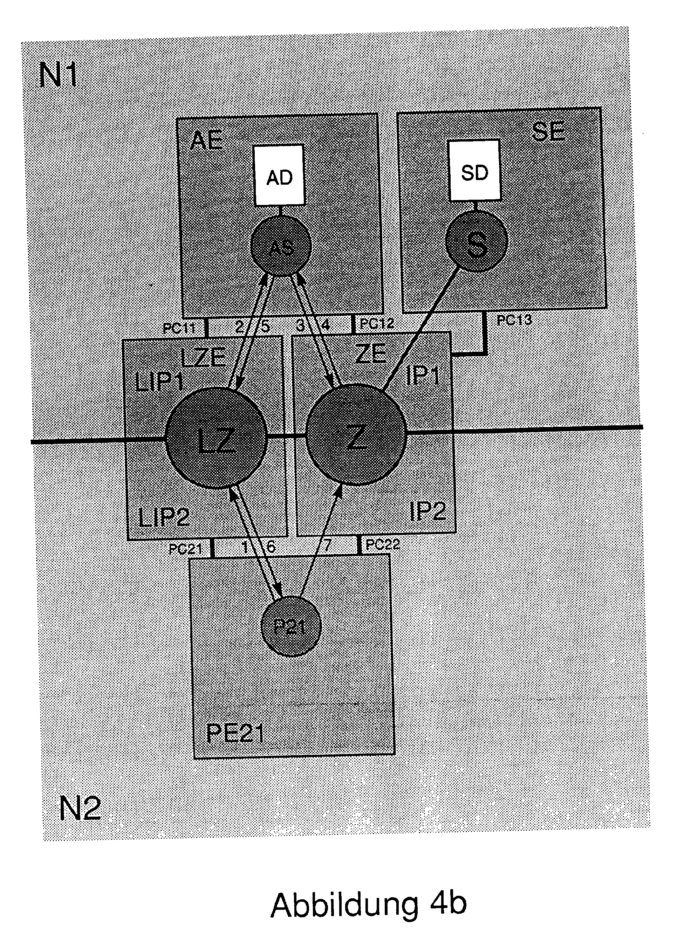

Abbildung 4b zeigt dasselbe logische Netzwerksystem wie Abbildung 4a, jedoch werden Logonzentrale LZ und Zentrale Z auf unterschiedlichen Einheiten LZE und ZE ausgeführt, welche beide über separate Netzwerkinterfaces mit Adressen LIP1&LIP2 bzw. IP1&IP2 mit den Segmenten N1 und N2 verbunden sind.

In diesem Fall benötigt ein Peripherieprozeß aus N1 bzw. N2 für den Verbindungsaufbau zu Z lediglich die Kenntnis der physikalischen Adresse des Netzwerkinterfaces LIP1 bzw. LIP2 sowie die lokale Kennung eines freien Verbindungsendpunktes der Logonzentrale. Die physikalische Adresse des Netzwerkinterfaces der Zentraleinheit ZE, welche einen freien Verbindungsendpunkt bereitstellt, wird einem autorisierten Peripherieprozeß zusammen mit der lokalen Kennung des bereitgestellten Verbindungsendpunktes von der Logonzentrale übermittelt, woraufhin der Peripherieprozeß eine logische Verbindung zu Z aufbauen kann.

Da LZ und Z auf verschiedenen Einheiten ausgeführt werden, muß eine mögliche Kommunikation zwischen LZ und Z zwangsläufig zwischen den entsprechenden Einheiten übertragen werden. Dies kann entweder durch eine separate direkte Verbindung der Einheiten LZE und ZE oder über eines der Segmente N1 oder N2 erfolgen. Wichtig ist in diesem Fall, daß die Kommunikation zwischen LZ und Z nicht über das unkritische Segment N2 (also Netzwerkinterfaces LIP2 und IP2) abgewickelt wird, da sonst die Kommunikation zwischen LZ und Z in unkritischen Segmenten abgehört werden kann. In einem Netzwerksystem nach Abbildung 4b erfolgt die Kommunikation zwischen LZ und Z über AS, so daß keine direkte Verbindung zwischen LZE und ZE erforderlich ist und die Nachrichten innerhalb N1 übertragen werden.

In Netzwerken nach einem der Ansprüche 6 bis 9 ist die physikalische Adresse mindestens eines Netzwerkinterfaces mindestens einer Zentrale, welche mindestens einen freien Verbindungsendpunkt bereitstellt, sowie die lokale Kennung des von genannter Zentrale bereitgestellten freien Verbindungsendpunktes den Peripheriethreads bekannt. Dabei können sowohl die physikalische Adresse, d.h. die Auswahl der Zentraleinheit, als auch die lokale Kennung entweder fest vorgegeben worden sein oder dynamisch von einem verbindungswilligen Peripheriethread erzeugt und betroffener Zentrale via der Logonzentrale übertragen werden. Die dynamische Auswahl einer Zentrale oder die dynamische Erzeugung der lokalen Kennung eines bereitzustellenden Verbindungsendpunktes hat den Vorteil, daß potentielle Angreifer die Verbindungsparameter nicht im voraus kennen und sie erst z.B.: durch "Port-Scannen" bestimmen müssen. Da das "Port-Scannen" eine bestimmte Zeitspanne benötigt, kann das Zeitintervall in welchem eine Zentrale freie Verbindungsendpunkte bereitstellt so kurz gewählt werden, daß die Zentrale unbenutzte freie Verbindungsendpunkte in den meisten Fällen schon vor ihrer Detektion durch einen Angreifer wieder geschlossen hat, autorisierte Peripheriethreads jedoch mit Kenntnis der Verbindungsparameter ohne nennenswerte Zeitverzögerung direkt eine Verbindung aufbauen können.

Besser ist es natürlich, wenn die physikalische Adresse der Zentraleinheit einer einen freien Verbindungsendpunkt bereitstellenden Zentrale oder die lokale Kennung eines bereitzustellenden Verbindungsendpunktes den Peripheriethreads unbekannt ist und sie mindestens einen dieser Verbindungsparameter erst nach einer positiv ausgefallenen Autorisierungsprüfung von der Logonzentrale erhalten (Ansprüche 10 und 16). Dabei können einer der Parameter entweder durch eine Logonzentrale (Ansprüche 11 und 17), eine Zentrale (Ansprüche 12 und 18) oder einen Autorisierungsservice (Ansprüche 13 und 19) erzeugt und via einer Logonzentrale an den verbindungswilligen Peripheriethread übermittelt werden.

Besonders vorteilhaft ist eine zufällige oder pseudozufällige Auswahl der Zentraleinheit (Anspruch 20) oder eine zufällige oder pseudozufällige Erzeugung der lokalen Kennung (Anspruch 14) eines bereitzustellenden Verbindungsendpunktes, um zu verhindern, daß potentielle Angreifer die Parameter eines neu bereitgestellten Verbindungsendpunktes erraten oder berechnen. Eine zusätzliche Verschlüsselung eines der Verbindungsparameter während der Übertragung an einen Peripherieprozeß verhindert das Abhören z.B.: durch "Sniffen" (Ansprüche 15 und 21).

Besonders vorteilhaft ist es, neben der dynamischen Erzeugung der lokalen Kennung eines bereitzustellenden Verbindungsendpunktes oder der dynamischen Auswahl einer Zentrale zusätzliche dynamische Zugangsdaten - z.B.: zufällige Einmalzugangsdaten - von der Logonzentrale, dem Autorisierungsservice oder der Zentrale erzeugen zu lassen und zusammen mit der physikalischen Adresse oder der lokalen Kennung einem autorisierten Peripherieprozeß und gegebenenfalls der Zentrale zu übermitteln, wobei der Peripherieprozeß nach Verbindungsaufbau zu einem bereitgestellten Verbindungsendpunkt einer Zentrale dieser Zentrale die von der Logonzentrale empfangenen dynamischen Zugangsdaten zu seiner Identifikation übermittelt, so daß die Zentrale überprüfen kann, ob der richtige Peripherieprozeß eine Verbindung zu ihr aufbaut. Auch für die Übertragung der dynamischen Zugangsdaten sind geeignete Verschlüsselungsverfahren vorteilhaft anwendbar.

Nachteilig in allen Netzwerksystemen nach Ansprüchen 1 bis 21 ist die Tatsache, daß Service S auf allen seinen Verbindungen dasselbe Protokoll zur Verfügung stellt. Umfaßt dieses Protokoll reine Client-Funktionen, ist es unmöglich die Service-Daten von einer anderen Einheit zu pflegen und zu warten. Umfaßt das Protokoll hingegen auch Administrationsfunktionen, erhalten alle Peripherieprozesse die Möglichkeit auf diese Funktionalität zuzugreifen. Dieses Problem kann durch zusätzliche Autorisierung von Administrationstransaktionen durch die jeweiligen Zentralen und/oder Autorisierungsservices entschärft werden, jedoch ist es besser, normalen Peripherieprozessen grundsätzlich keine Möglichkeit zu geben, auf Administrationsfunktionen zuzugreifen, wie in einem Netzwerksystem mit einem nach Anspruch 22 gearteten Service, welcher z.B.: auf einer Verbindung zu einer Zentrale nur Client-Funktionen und auf einer anderen Verbindung zu einer Administrationszentrale, welche nur aus dem kritischen Netzwerksegment erreichbar ist, Administrationsfunktionen bereitstellt.

Die folgenden Ansprüche charakterisieren Services, welche es erlauben, während des Betriebes Protokolle an- bzw. abzuschalten (Ansprüche 23 bis 25), zu laden oder zu entladen (Ansprüche 29 bis 31) sowie einzelne Funktionen von Protokollen anbzw. abzuschalten (Ansprüche 26 bis 28), zu laden oder zu entladen (Ansprüche 32 bis 34).

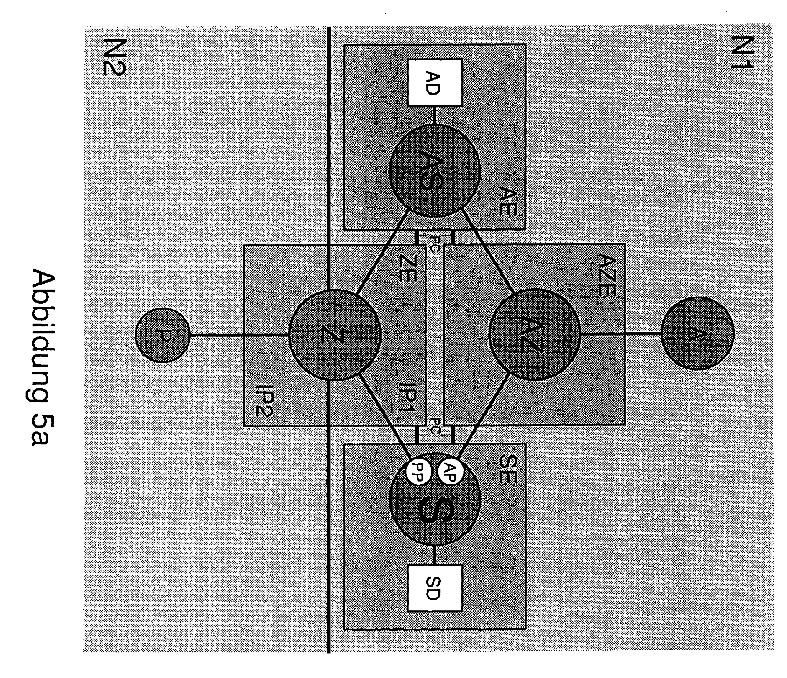

Abbildung 5a zeigt ein Ausführungsbeispiel eines Netzwerksystems nach Anspruch 22 bestehend aus zwei getrennten Netzwerksegmenten N1 und N2. Nachrichten zwischen N1 und N2 werden nicht geroutet, so daß Einheiten des Segmentes N1 keine direkten Verbindungen zu Einheiten des Segmentes N2 aufbauen können. Einheit ZE ist jeweils über ein eigenes Netzwerkinterface mit Adresse IP1 bzw. IP2 mit Segmenten N1 bzw. N2 verbunden. Einheiten AE&SE sind Bestandteil des Segmentes N1 und können von Einheiten aus N2 nicht erreicht werden. Einheiten AE&SE in N1 sind über die physikalischen Verbindungen PC mit dem Netzwerkinterface IP1 der Einheit ZE sowie der Einheit AZE verbunden.

Einheit ZE führt Thread Z aus, welcher über IP1 bzw. IP2 Verbindungen von Threads aus N1 wie N2 akzeptieren kann. Z besitzt jeweils eine stehende logische Verbindung zu Autorisierungsservice AS auf AE und zu Service S auf SE und stellt zu jedem Zeitpunkt mindestens einen neuen Verbindungsendpunkt unter einer fixen lokalen Kennung zur Verfügung. Die lokale Kennung der Verbindungsendpunkte von Z sowie die Adresse IP1 bzw. IP2 des Netzwerkinterfaces von ZE ist allen Peripherieprozessen in N1 bzw. N2 bekannt, so daß Peripherieprozesse jederzeit eine Verbindung zu Z aufbauen können.

Einheit AZE führt Prozeß AZ aus, welcher nur Verbindungen von Prozessen aus N1 akzeptiert. AZ besitzt eine stehende logische Verbindung zu Autorisierungsservice AS auf AE und zu Service S auf SE und stellt zu jedem Zeitpunkt mindestens einen neuen Verbindungsendpunkt unter einer fixen lokalen Kennung zur Verfügung. Die lokale Kennung der Verbindungsendpunkte von AZ sowie die physikalische Adresse der Einheit SE ist allen Administrationsprozessen A in N1 bekannt, so daß sie jederzeit eine Verbindung zu AZ aufbauen können.

Einheit AE speichert sicherheitskritische Autorisierungsdaten AD und führt Autorisierungsservice AS aus, welcher jeweils eine stehende logische Verbindung zu AZ und Z unterhält. Diese beiden Verbindungen sind die einzigen logischen Verbindungen zu bzw. von Threads auf Einheit AE.

Einheit SE speichert sicherheitskritische Daten SD und führt Prozeß S aus, welcher jeweils eine stehende logische Verbindung zu AZ und Z unterhält. Diese beiden Verbindungen sind die einzigen logischen Verbindungen zu bzw. von Threads auf Einheit SE.

Für die Verbindung zu Z stellt S das Peripherieprotokoll PP bereit, welches Peripherieprozeß P via Z den Zugriff auf Daten SD gestattet. Dabei kontrolliert das Peripherieprotokoll PP die Funktionalität, welche S den Peripherieprozessen zur Verfügung stellt. Transaktionen von Peripherieprozessen zu S können bei Bedarf von Z durch AS autorisiert werden.

Auf der Verbindung zu AZ stellt S das Administrationsprotokoll AP bereit, welches A via AZ erlaubt, die Daten SD zu pflegen. Transaktionen von Administrationsprozessen von A zu S können bei Bedarf von AZ durch AS autorisiert werden.

Der Zugriff auf Funktionen des Administrationsprotokolls von S ist somit ausschließlich Peripherieprozessen von AZ gestattet, welche zwingend aus N1 stammen müssen, da Einheiten aus N2 keinen Zugriff auf AZE haben. Da ferner keine logische Verbindung zwischen Z und AZ besteht, können Peripherieprozesse aus N2 weder direkt noch indirekt Kontakt mit AZ aufnehmen und erhalten somit keinen Zugriff auf das Administrationsprotokoll AP von S.

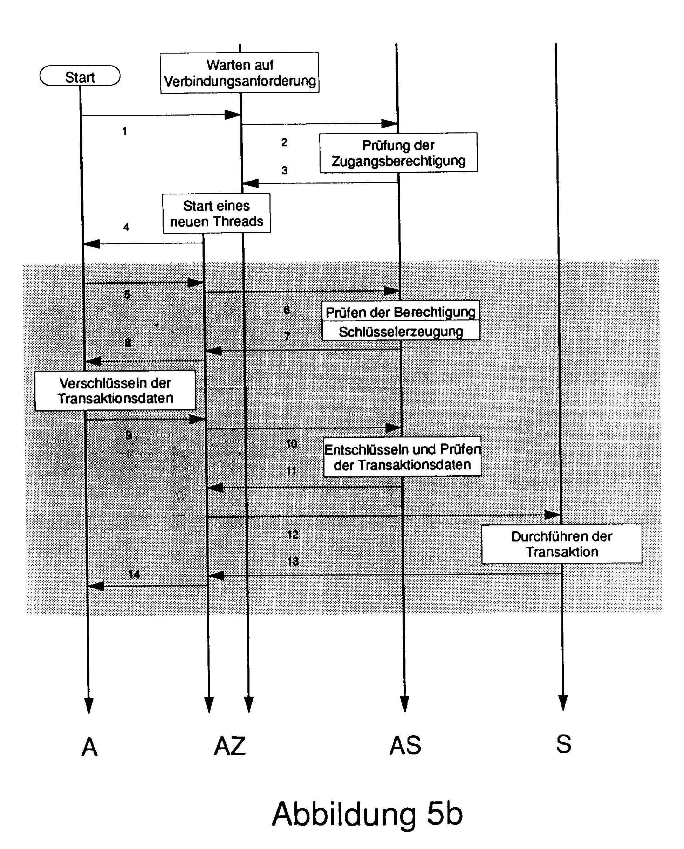

Abbildung 5b illustriert das Timing einer autorisierten Administrationstransaktion von A zu S in einem System nach Abbildung 5a. Nachrichten 1-4 bilden den Verbindungsaufbau von A zu AZ, welcher von AS autorisiert wird (2&3).

Zu Beginn der Administrationstransaktion schickt A via AZ eine Anforderung mit seinen Identitätsdaten an AS zur Bereitstellung eines Schlüssels zur Verschlüsselung der Zugangsdaten (5&6). AS überprüft die Identität und erzeugt einen neuen Einmalschlüssel, welchen AS temporär speichert und via AZ an A zurücksendet (7&8). A verschlüsselt seine Zugangsdaten mit dem empfangenen Einmalschlüssel und schickt die Transaktionsaufforderung zusammen mit seiner Identität, den Transaktions- und den verschlüsselten Zugangsdaten an AZ (9). AZ leitet die Identität, die verschlüsselten Zugangsdaten und die logische Qualität der Transaktion an AS weiter (10). AS entschlüsselt die Zugangsdaten mit Hilfe des gespeicherten Einmalschlüssels und überprüft die Korrektheit der Zugangsdaten sowie die Autorisierung der Transaktion für A. Fällt diese Prüfung positiv aus, sendet AS eine Autorisierungsbestätigung an AZ, woraufhin AZ die Transaktionsaufforderung an S weiterleitet (12). S führt die Transaktion aus und sendet ihr Resultat via AZ an A zurück (13&14).

Viele Internet Service Provider haben heutzutage das Problem, daß durch ein (IP-Adresse, lokaler Port) stets nur ein Server-Prozeß angesprochen werden kann, welcher bei einer großen Anzahl von parallelen Client-Zugriffen schnell überlastet ist. Besser wäre es, wenn die gesamte Client-Last auf mehrere redundante Server-Prozesse, welche auf verschiedenen Einheiten laufen, verteilt werden könnte. Eine einheitliche Adressierung aller potentiellen redundanten Zentralen über eine einzige IP-Adresse und einem einzigen lokalen Port ist nach heutigem Stand der Technik nicht möglich, da jede der redundanten Server-Prozesse über eine eigene lokale Kennung bzw. ihre Einheit über eine eigene physikalische Adresse verfügen und Client-Prozesse nach dem Stand der Technik stets nur Verbindungen zu einem eindeutig adressierten Server-Prozess aufbauen können. Die Tatsachen, daß einem Peripheriethread in einem Netzwerksystem nach Anspruch 10 bzw. 16 zu Beginn des Verbindungsaufbaues die lokale Kennung der Zentrale (Anspruch 10) bzw. die physikalische Adresse des Netzwerkinterfaces der Zentraleinheit (Anspruch 16) unbekannt sind und genannter Peripheriethread die lokale Kennung der Zentrale (Anspruch 10) bzw. die physikalische Adresse des Netzwerkinterfaces der Zentraleinheit (Anspruch 16) erst im Laufe des Logonprozesses übermittelt erhält, läßt sich sehr vorteilhaft zum gezielten Verteilen der Peripheriethreads auf einzelne Subzentralen benutzen.

In einem Netzwerksystem nach einem der Ansprüche 35 oder 36 verbindet sich ein Peripheriethread zunächst mit der LogonZentrale und erhält im Laufe des Logon-Prozesses vom Logon-System die Koordinaten einer Zentrale dynamisch zugewiesen. Die Auswahl der Zentrale kann nach Anspruch 10 bzw. 16 anhand von beliebigen Kriterien erfolgen, welche in den Ansprüchen 35 und 36 für bestimmte Anwendungen näher spezifiziert sind.

Hängt die Auswahl der Zentrale von der Autorisierung des Peripherieprozesses ab, können gezielt einzelne Zentralen beispielsweise für unauthentisierte Gast-Benutzer, für authentisierte Benutzer, oder für Systemadministratoren ausgewählt werden. Dabei erhalten die einzelnen Peripheriethreads lediglich Informationen über das jeweils autorisierte Subsystem, so daß ein Gast-Benutzer lediglich die Koordinaten einer Gast-Zentrale und absolut keine Informationen über andere Zentralen erhält, welche nur authentisierten Benutzern oder Systemadministratoren zugänglich sind. An den einzelnen Zentralen stehen selbstverständlich nur solche Informationen und Services zur Verfügung, welche der jeweiligen Autorisierung ihrer Peripheriethreads entsprechen. Diese Technik stellt sehr effizient sicher, daß bestimmte Services nur mit bestimmten Autorisierungen erreichbar sind und sie für Peripherieprozesse ohne die erforderlichen Autorisierung weder sichtbar noch erreichbar sind.

Zur Verteilung einer großen Anzahl von Peripherieprozesse auf mehrere Zentralen von gleichartigen Subsystemen - "Loadbalancing" -, wählt das Logon-System die Zentrale nach der Anzahl der Peripheriethreads aus, welche bereits mit auswählbaren Zentralen verbunden sind, oder nach der Belastung der auswählbaren Zentralen bzw. ihrer Zentraleinheiten aus. Da die aktuelle Belastung einer Zentrale sehr stark schwanken kann, ist es besonders vorteilhaft anstelle der punktuellen Belastung zu einem bestimmten Zeitpunkt, die Belastung über einen gewissen Zeitraum zu mitteln und einen gleitenden Mittelwert als Maßstab zu verwenden. Als Maß für die Belastung einer Zentrale können verschiedene Einzelkriterien, wie z.B.: die Anzahl und Aktivität der Prozesse, die CPU-Auslastung, die Auslastung der Speichermedien (Hauptspeicher, sekundäre und/oder externe Speichermedien) herangezogen werden.

Erfolgt die Auswahl der Zentrale anhand von bestimmten Systemanforderungen, welche ein Peripheriethread selbst oder das Logon-System für einen bestimmten Peripheriethread, an die auszuwählende Zentrale stellt, ist es möglich nur solche Zentralen auszuwählen, welche die erforderlichen Systemressourcen bereitstellen können. So kann beispielsweise einerseits ein Peripheriethread gezielt eine Verbindung zu einer Zentrale anfordern, welche bestimmte Informationen, Services oder sonstige Systemressourcen anbietet. Andererseits kann das Logon-System bereits wissen, daß Peripheriethreads eines bestimmten Types bestimmte Informationen, Services oder Systemressourcen benötigen und von sich aus nur solche Zentralen auswählen, welche in der Lage sind, die erforderlichen Informationen, Services oder Systemressourcen anzubieten.

Zur Optimierung des Systemdurchsatzes ist die Auswahl der Zentrale in Abhängigkeit von der geographischen, der netz- bzw. systemtopologischen Lage der Kommunikationspartner oder der Verbindungsqualität und -geschwindigkeit besonders wichtig. So sind beispielsweise verschiedene Verbindungen durch die eingesetzte Übertragungstechnik auf verschiedene maximale Übertragungsraten begrenzt. Die maximale Übertragungsrate bestimmt ihrerseits die minimale Übertragungszeit einzelner Nachrichten und damit das gesamte Zeitverhalten des Systems. Kommen verschiedene Übertragungstechniken in einem Gesamtsystem zum Einsatz, ist es besonders vorteilhaft, einzelne Subsysteme auf die jeweilige Übertragungstechnik anzupassen. Dies erlaubt es dem Logon-System diejenige Zentrale auszuwählen, welche besonders auf die zu einem bestimmten Peripheriethread verwendete Übertragungstechnik optimiert ist. Ein typisches Beispiel für eine solche Anwendung ist der Systemzugriff einerseits aus einem LAN mit Übertragungsraten größer als 10 MBit/s und andererseits aus einem WAN per Modem mit Übertragungsraten in der Größenordnung von 64 kBit/s. In einem solchen Umfeld ist es besonders vorteilhaft für beide Zugriffsarten getrennte Subsysteme mit eigenen Zentralen bereitzustellen und die Auswahl der Zentrale bzw. des Subsystems in Abhängigkeit von der Übertragungsrate zu einem bestimmten Peripheriethread zu treffen.

In der Regel hängt jedoch die maximale Übertragungsrate einer Verbindung zwischen zwei Kommunikationspartnern nicht nur von der physikalischen Übertragungstechnik sondern auch von ihrer geographischen Lage, ihrer netztopologischen Lage, d.h. der Anzahl von physikalischen Zwischenstationen (Router, Switches, Firewalls etc), über welche eine Nachricht zwischen zwei Kommunikationspartnern weitergeleitet werden muß, und ihrer systemtopologischen Lage, d.h der Anzahl von Prozessen, über welche eine Nachricht zwischen zwei Kommunikationspartnern innerhalb der logischen Systemarchitektur weitergeleitet werden muß, ab. Besonders vorteilhaft ist es daher, die Auswahl der Zentralen sowohl anhand der physikalischen Übertragungstechniken als auch der genannten geographischen, netz- und systemtopologischen Kriterien zu treffen.

## Patentansprüche

1. Netzwerksystem bestehend aus mindestens einer Zentraleinheit ZE, mindestens einer Serviceeinheit SE, welche physikalisch mit ZE verbunden ist, und einer beliebigen Anzahl physikalisch mit ZE verbundenen Peripherieeinheiten PE1..n,
**dadurch gekennzeichnet,**
daß erstens ZE mindestens einen Thread - Zentrale genannt - , SE mindestens einen Thread - Service genannt - und die Peripherie- oder Zentraleinheiten beliebig viele Periphe riethreads ausführen, zweitens mindestens ein Service mindestens eine stehende logische bidirektionale Kommunikationsverbindung zu mindestens einer Zentrale aufbauen oder von mindestens einer Zentrale akzeptieren kann, drittens über genannte Verbindung(en) zwischen Service(s) und Zentrale(n) hinaus keine weiteren logischen Verbindungen zu Threads, welche auf SE ausgeführt werden, aufgebaut werden können oder von Threads, welche auf SE ausgeführt werden, aufgebaut werden, und viertens direkte logische Kommunikationsverbindungen zwischen Peripheriethreads, welche auf einer Peripherieeinheit oder einer Zentraleinheit ausgeführt werden, und ZE aufbaubar sind, so daß Daten, welche auf SE gespeichert sind, für die Zentrale(n) ausschließlich über mindestens einen Service und für die Peripheriethreads ausschließlich über mindestens eine der Zentralen und mindestens einen Service erreichbar sind.

2. Netzwerksystem nach Anspruch 1,
**dadurch gekennzeichnet,**
daß mindestens eine Zentrale mindestens einer Verbindung mindestens eines mit genannter Zentrale verbundenen Services mindestens eine logische Kennung derart zuordnet, daß mindestens ein Peripheriethread allein aufgrund dieser logischen Kennung(en) indirekt über die Zentrale mit mindestens einem Mitglied einer durch die logische Kennung(en) eindeutig bestimmten Gruppe von Services kommunizieren kann.

3. Netzwerksystem nach einem der Ansprüche 1 oder 2 bestehend aus mindestens zwei Segmenten N1 und N2, mindestens einer Zentraleinheit ZE, welche mit jedem Segment N1 und N2 physikalisch verbunden ist, mindestens einer Serviceeinheit SE, welche direkt oder als Bestandteil des Segmentes N1 physikalisch mit ZE verbunden ist und einer beliebigen Anzahl über Segmente N1 oder N2 physikalisch mit ZE verbundenen Peripherieeinheiten PE1..n,
**dadurch gekennzeichnet,**
daß direkte logische Kommunikationsverbindungen zwischen Peripheriethreads, welche auf einer Peripherieeinheit aus N1 oder N2 oder einer Zentraleinheit ausgeführt werden, und ZE aufbaubar sind, wobei die Zentraleinheit(en) direkte logische Verbindungen sowohl zu Einheiten aus N1 als auch N2 aufbauen oder akzeptieren kann(können), und wobei Einheiten aus N1 keine direkten logischen Verbindungen zu Einheiten aus N2 mit Ausnahme der Zentraleinheit(en) und Einheiten aus N2 keine direkten logischen Verbindungen zu Einheiten aus N1 mit Ausnahme der Zentraleinheit(en) aufbauen können, und wobei Einheiten aus N1 keine direkten logischen Verbindungen von Einheiten aus N2 mit Ausnahme der Zentraleinheit(en) und Einheiten aus N2 keine direkten logischen Verbindungen von Einheiten aus N1 mit Ausnahme der Zentraleinheit(en) akzeptieren können.

4. Netzwerksystem nach einem der Ansprüche 1 bis 3,
**dadurch gekennzeichnet,**
daß Zentraleinheit ZE Autorisierungsdaten AD speichert und daß mindestens ein Peripheriethread nach Verbindungsaufbau zur Zentrale Z auf ZE der Zentrale Z Zugangsdaten übermittelt, Z anhand der empfangenen Zugangsdaten und ihr vorliegender Autorisierungsdaten AD die Zugangsberechtigung des genannten Peripheriethreads überprüft und nach negativem-Ausfall genannter Zugangsprüfung die Verbindung zu genanntem Peripheriethread abbricht.

5. Netzwerksystem nach einem der Ansprüche 1 bis 3,
**dadurch gekennzeichnet,**
daß auf mindestens einer Einheit AE, welche direkt oder indirekt physikalisch mit ZE verbunden ist, Autorisierungsdaten AD gespeichert sind, und daß AE mindestens einen Autoisierungsthread AS ausführt, welcher eine stehende logische bidirektionale Verbindung zu oder von Z aufbaut oder akzeptiert, und daß mindestens ein Peripheriethread nach dem Verbindungsaufbau zu Zentrale Z der Zentrale Z Zugangsdaten übermittelt, Z genannte Zugangsdaten empfängt und an AS weiterleitet, AS anhand der empfangenen Zugangsdaten und der Autorisierungsdaten AD die Zugangsberechtigung des genannten Peripheriethreads überprüft und das Ergebnis die ser Überprüfung an Z mitteilt, und daß Z bei negativem Ausfall der Zugangsüberprüfung die Verbindung zu genanntem Peripheriethread abbricht.

6. Netzwerksystem nach Anspruch 1,
**dadurch gekennzeichnet,**
daß mindestens eine Zentraleinheit mindestens einen Thread - Logonzentrale genannt - ausführt, welcher zu jedem Zeit punkt mindestens einen freien Verbindungsendpunkt unter einer fixen lokalen Kennung bereitstellt, und daß keine der Zentrale(n) freie logische Verbindungsendpunkte zur Verfügung stellen, ohne zuvor von einer Logonzentrale dazu auf gefordert worden zu sein, und daß mindestens ein Peripheriethread zum Verbindungsaufbau mit einer Zentrale zunächst eine Verbindung zu einer Logonzentrale aufbaut, die Logonzentrale über ein beliebiges Interthread- oder Interprozeß kommunikationsmedium mindestens eine Zentrale, welche auf einer Zentraleinheit ausgeführt wird, deren physikalische Adresse genanntem Peripheriethread bekannt ist, auffordert, einen freien Verbindungsendpunkt bereitzustellen, mindestens eine der aufgeforderten Zentralen einen freien Verindungsendpunkt für einen definierten Zeitraum unter einer genanntem Peripheriethread bekannten lokalen Kennung zur Verfügung stellt, genannter Peripheriethread innerhalb des genannten Zeitraumes eine Verbindung zu mindestens einem der neu bereitgestellten freien Verbindungsendpunkte mindestens einer Zentrale aufbaut, und daß jede Zentrale alle bereitgestellten freien Verbindungsendpunkte wieder löscht, zu denen der verbindungswillige Peripheriethread innerhalb des genannten definierten Zeitraumes keine Verbindung auf baut.

7. Netzwerksystem nach Anspruch 6,
**dadurch gekennzeichnet,**
daß das Kommunikationsmedium zwischen mindestens einer Logonzentrale und mindestens einer Zentrale eine stehende logische Verbindung ist.

8. Netzwerksystem nach einem der Ansprüche 6 oder 7,
**dadurch gekennzeichnet,**
daß mindestens ein Peripheriethread der Logonzentrale seine Zugangsdaten übermittelt, die Logonzentrale anhand der ihr übermittelten Zugangsdaten und ihr zur Verfügung stehenden Autorisierungsdaten die Zugangsberechtigung des genannten Peripheriethreads überprüft und erst nach positivem Ausfall der Zugangsprüfung mindestens eine der Zentralen auffordert, einen freien Verbindungsendpunkt bereitzustellen.

9. Netzwerksystem nach Anspruch 6,
**dadurch gekennzeichnet,**
daß mindestens eine Einheit AE Autorisierungsdaten abgespeichert, und daß jede der Einheit(en) AE eine physikalische Verbindung zu mindestens einer Zentraleinheit besitzt(en), und daß jede der Einheit(en) AE einen Autorisierungsservice AS ausführt(en), welcher stehende logische Verbindungen zu oder von mindestens einer Logonzentrale und mindestens einer Zentrale aufbauen oder akzeptieren kann, ein Peripheriethread nach Verbindungsaufbau zu einer Logonzentrale dieser Logonzentrale seine Zugangsdaten sendet, die Logonzentrale jede einkommende Verbindungsanforderung eines Peripheriethreads zusammen mit den empfangenen Zugangsdaten des Peripheriethreads an den Autorisierungsservice weiterleitet, der Autorisierungsservice an hand der empfangenen Zugangsdaten und den Autorisierungsdaten die Zugangsberechtigung des Perhipheriethreads über prüft und bei positivem Ausfall genannter Zugangsüberprüfung mindestens eine Zentrale auffordert, einen freien Verbindungsendpunkt bereitzustellen, mindestens eine der aufgeforderten Zentralen einen freien Verbindungsendpunkt für einen definierten Zeitraum unter einer genanntem Peripheriethread bekannten lokalen Kennung bereitstellt, der Peripheriethread innerhalb des genannten Zeitraumes eine Verbindung zu mindestens einem der neu bereitgestellten freien Verbindungsendpunkte mindestens einer Zentrale auf baut, und daß jede Zentrale alle bereitgestellten freien Verbindungsendpunkte wieder löscht, zu denen der verbindungswillige Peripheriethread nicht innerhalb des genannten definierten Zeitraumes eine Verbindung aufbaut.

10. Netzwerksystem nach einem der Ansprüche 6 bis 9,
**dadurch gekennzeichnet,**
daß mindestens einem Peripheriethread die lokale Kennung mindestens eines von mindestens einer Zentrale bereitgestellten Verbindungsendpunktes unbekannt ist und genannter Peripheriethread genannte lokale Kennung von mindestens einer Logonzentrale übermittelt bekommt.

11. Netzwerksystem nach Anspruch 10,
**dadurch gekennzeichnet,**
daß mindestens eine Logonzentrale mindestens eine lokale Kennung mindestens eines bereitzustellenden freien Verbindungsendpunktes erzeugt und sowohl mindestens einem verbindungswilligen Peripheriethread als auch mindestens einer mindestens einen Verbindungsendpunkt bereitstellen den Zentrale übermittelt.

12. Netzwerksystem nach Anspruch 10,
**dadurch gekennzeichnet**
daß mindestens eine Zentrale mindestens eine lokale Kennung mindestens eines bereitzustellenden freien Verbindungsendpunktes erzeugt und via mindestens einer Logonzentrale mindestens einem verbindungswilligen Peripherie thread übermittelt.

13. Netzwerksystem nach Ansprüchen 9 und 10,
**dadurch gekennzeichnet,**
daß mindestens ein Autorisierungsservice mindestens eine lokale Kennung mindestens eines bereitzustellenden freien Verbindungsendpunktes erzeugt und sowohl via mindestens einer Logonzentrale mindestens einem verbindungswilligen Peripheriethread als auch mindestens einer mindestens einen Verbindungsendpunkt bereitstellenden Zentrale über mittelt.

14. Netzwerksystem nach einem der Ansprüche 9 bis 13,
**dadurch gekennzeichnet,**
daß mindestens eine lokale Kennung von mindestens einem von mindestens einer Zentrale bereitzustellenden freien Verbindungsendpunkt zufällig oder pseudozufällig erzeugt wird.

15. Netzwerksystem nach einem der Ansprüche 9 bis 14,
**dadurch gekennzeichnet,**
daß die lokale Kennung verschlüsselt übertragen wird.

16. Netzwerksystem nach einem der Ansprüche 6 bis 15,
**dadurch gekennzeichnet,**
daß mindestens einem Peripheriethread die physikalische Adresse des Netzwerkinterfaces mindestens einer Zentraleinheit unbekannt ist und genannter Peripheriethread die physikalische Adresse mindestens eines Netzwerkinterfaces mindestens einer Zentraleinheit, welche mindestens eine mindestens einen freien Verbindungsendpunkt bereit stellende Zentrale ausführt, von mindestens einer Logonzentrale übermittelt bekommt.

17. Netzwerksystem nach Anspruch 16,
**dadurch gekennzeichnet,**
daß mindestens eine Logonzentrale mindestens eine mindestens einen freien Verbindungsendpunkt bereitstellende Zentrale Z1 auswählt und mindestens einem verbindungswilligen Peripheriethread die physikalische Adresse mindestens eines Netzwerk-interfaces der Z1 ausführenden Zentraleinheit übermittelt.

18. Netzwerksystem nach Anspruch 16,
**dadurch gekennzeichnet,**
daß mindestens eine Zentrale mindestens eine mindestens einen freien Verbindungsendpunkt bereitstellende Zentrale Z1 auswählt und mindestens einem verbindungswilligen Peripheriethread via mindestens einer Logonzentrale die physikalische Adresse mindestens eines Netzwerkinterfaces der Z1 ausführenden Zentraleinheit übermittelt.

19. Netzwerksystem nach Ansprüchen 9 und 16,
**dadurch gekennzeichnet,**
daß mindestens ein Autorisierungservice mindestens eine mindestens einen freien Verbindungsendpunkt bereitstellende Zentrale Z1 auswählt und mindestens einem verbindungswilligen Peripheriethread via mindestens einer Logonzentrale die physikalische Adresse mindestens eines Netzwerkinterfaces der Z1 ausführenden Zentraleinheit übermittelt.

20. Netzwerksystem nach einem der Ansprüche 16 bis 19,
**dadurch gekennzeichnet,**
daß die Auswahl der Zentrale zufällig oder pseudozufällig erfolgt.

21. Netzwerksystem nach einem der Ansprüche 16 bis 20,
**dadurch gekennzeichnet,**
daß die physikalische Adresse mindestens eines Netzwerk-interfaces mindestens einer Zentraleinheit, welche mindestens einen freien Verbindungsendpunkt bereitstellt, verschlüsselt übertragen wird.

22. Netzwerksystem nach einem der vorherigen Ansprüche
**dadurch gekennzeichnet,**
daß mindestens ein Service zu oder von mindestens zwei Zentralen jeweils mindestens eine stehende logische Verbindung aufbaut oder akzeptiert, wobei genannter Service auf mindestens zwei seiner Verbindungen unterschiedliche Protokolle zur Verfügung stellt.

23. Netzwerksystem nach einem der vorherigen Ansprüche
**dadurch gekennzeichnet,**
daß mindestens eines der Protokolle mindestens eines Services während des Betriebes angeschaltet werden kann.

24. Netzwerksystem nach einem der vorherigen Ansprüche
**dadurch gekennzeichnet,**
daß mindestens eines der Protokolle mindestens eines Services während des Betriebes abgeschaltet werden kann.

25. Netzwerksystem nach einem der Ansprüche 23 oder 24
**dadurch gekennzeichnet,**
daß das An- oder Abschalten eines Protokolles durch mindestens eine Funktion eines Protokolles gesteuert werden kann.

26. Netzwerksystem nach einem der vorherigen Ansprüche
**dadurch gekennzeichnet,**
daß mindestens eine Funktion mindestens eines Protokolles mindestens eines Services während des Betriebes angeschaltet werden kann.

27. Netzwerksystem nach einem der vorherigen Ansprüche
**dadurch gekennzeichnet,**
daß mindestens eine Funktion mindestens eines Protokolles mindestens eines Services während des Betriebes abgeschaltet werden kann.

28. Netzwerksystem nach einem der Ansprüche 26 oder 27
**dadurch gekennzeichnet,**
daß das An- oder Abschalten mindestens einer Funktion eines Protokolles durch mindestens eine Funktion eines Protokolles gesteuert werden kann.

29. Netzwerksystem nach einem der vorherigen Ansprüche
**dadurch gekennzeichnet,**
daß mindestens eines der Protokolle mindestens eines Services während des Betriebes in den Adreßraum des betroffenen Services geladen werden kann.

30. Netzwerksystem nach einem der vorherigen Ansprüche
**dadurch gekennzeichnet,**
daß mindestens eines der Protokolle mindestens eines Services während des Betriebes aus dem Adreßraum des betroffenen Services entladen werden kann, so daß alle Funktionen eines entladenen Protokolles erst nach einem erneuten Laden wieder im Adreßraum des betroffenen Services ansprechbar sind.

31. Netzwerksystem nach einem der Ansprüche 29 oder 30
**dadurch gekennzeichnet,**
daß das Laden oder Entladen mindestens eines Protokolles durch mindestens eine Funktion eines Protokolles gesteuert werden kann.

32. Netzwerksystem nach einem der vorherigen Ansprüche
**dadurch gekennzeichnet,**
daß mindestens eine Funktion mindestens eines Protokolles mindestens eines Services während des Betriebes in den Adreßraum des betroffenen Services geladen werden kann.

33. Netzwerksystem nach einem der vorherigen Ansprüche
**dadurch gekennzeichnet,**
daß mindestens eine Funktion mindestens eines Protokolles mindestens eines Services während des Betriebes aus dem Adreßraum des betroffenen Services entladen werden kann, so daß die Funktion erst nach einem erneuten Laden wieder im Adreßraum des betroffenen Services ansprechbar ist.

34. Netzwerksystem nach einem der Ansprüche 32 oder 33
**dadurch gekennzeichnet,**
daß das Laden oder Entladen mindestens einer Funktion eines Protokolles durch mindestens eine Funktion eines Protokolles gesteuert werden kann.

35. Netzwerksystem nach Anspruch 10
**dadurch gekennzeichnet,**
daß die Auswahl der Zentrale von der Authorisierung des genannten Peripheriethreads, oder von der Anzahl verbundener Periphereiethreads jeder auswählbaren Zentrale, oder von der Belastung jeder auswählbaren Zentrale, oder von den Systemanforderungen des genannten Peripherie threads, oder von der Verbindungsqualität und - geschwindigkeit zwischen genanntem Peripheriethread und der Logonzentrale oder jeder auswählbaren Zentraleeinheit, oder von der geographischen Lage(n) der auswählbaren Zentraleinheiten oder der Peripherieeinheit, welche genannten Peripheriethread ausführt, oder von der netztopologischen Lage(n) der Peripherie- oder auswählbaren Zentraleinheiten, oder von der systemtopologischen Lage(n) des Peripheriethreads oder auswählbaren Zentralen abhängt.

36. Netzwerksystem nach Anspruch 16
**dadurch gekennzeichnet,**
daß die Auswahl einer eine au swählbare Zentrale ausführende Zentraleeinheit - auswählbare Zentraleinheit genannt - von der Authorisierung des genannten Peripherie threads, oder von der Anzahl verbundener Periphereie threads jeder auswählbaren Zentrale oder Zentraleinheit, oder von der Belastung jeder auswählbaren Zentraleeinheit, oder von den Systemanforderungen des Peripheriethreads, oder von der Verbindungsqualität und - geschwindigkeit zwischen genanntem Peripheriethread und der Logonzentrale oder jeder auswählbaren Zentraleeinheit, oder von der geographischen Lage(n) der auswählbaren Zentraleinheiten oder der Peripherieeinheit, welche genannten Peripheriethread ausführt, oder von der netztopologischen Lage(n) der Peripherie- oder auswählbaren Zentraleinheiten, oder von der systemtopologischen Lage(n) des Peripheriethreads oder auf auswählbaren Zentraleinheiten ausgeführten Zentral(en) abhängt.
